# EUROPEAN PATENT APPLICATION

(11) **EP 1 500 958 A1**
(43) Date of publication of application: **26.01.2005**
(21) Application number: 03425484.7
(22) Date of filing: 21.07.2003
(51) Int. Cl.: G02B 6/00

(54) **Furniture article and related lighting device**

(71) Applicant: Mustacciuoli, Laura, 00060 Formello RM (IT)
(72) Inventor: Mustacciuoli, Laura, 00060 Formello RM (IT)
(74) Representative: Leone, Mario

(57) **Abstract**

Furniture article comprising: a main body apt to serve as light guide and having at least one transverse light-inletting surface having an elongated development; and a lighting device (1) removably connectable to the main body and comprising an outer casing (2) having a light-outletting port (3) of elongated shape and a light source having an elongated development housed within the outer casing (2) and extending at the light-outletting port (3), the arrangement being such that, when the device (1) itself is connected to the main body, the light-outletting port (3) is fully engaged by the light-inletting surface so that the light is conveyed within the main body itself through said inletting surface (Figure 3a).

## Description

The present invention relates to a furniture article and to a related lighting device.

One of the aspects which influences the most the aesthetics of houses and professional environments is lighting, and above all the lighting of furniture and furniture articles in general - e.g. armchairs, tables, partitions, doors, bookcases etc. - contained in the environment under consideration.

A common need is that of having a lighting which is capable of evidencing specific features or selected portions of the furniture articles, preferably with a light of desired and possibly differentiated intensity.

However, known-art solutions do not fully satisfy this need.

Hence, the technical problem underlying the present invention is that of providing furniture articles equipped with lighting means and a related lighting device alternative to known-art systems and meeting the abovementioned need.

Such a problem is solved by a device according to claim 1.

According to the same inventive concept, the invention further provides a furniture article according to claim 13.

In the present context, the wording 'furniture article' should be construed in its broader meaning as related to any furniture article, like e.g. armchairs, tables, closets, partitions, doors, bookcases, simple shelves and their components.

The unitary inventive concept at the basis of the present invention lies in the fact that there are provided a furniture article and a related specific removable lighting device by means of which light is effectively conveyed without dispersions through a light guide of the article itself, thereby providing a brightness of desired intensity only at the portions of the latter implementing said light guide.

The present invention provides some relevant advantages. The main advantage lies in the fact that the furniture article and the related lighting device provide an intense brightness merely of selected portions of the article itself, and specifically of the portions implementing the light-outletting surfaces, and optionally a suffused brightness of the portions implementing the walls of the light guide. Hence, the invention enables to put into evidence only selected portions of the furniture article by a light of desired and differentiated intensity.

Moreover, the lighting device of the invention, also by virtue of the option of removable connection to the furniture article, provides the aforementioned effective, selective lighting of the latter, and therefore a desired aesthetic effect in the furnished environment, with no need to study complex and bulky lighting systems separate from the furniture article.

Moreover, the removable connection between lighting device and furniture article makes the invention extremely versatile.

Other advantages, features and the modes of employ of the present invention will be made apparent in the following detailed description of some embodiments thereof, given by way of example and not for limitative purposes. It will be made reference to the figures of the annexed drawings, wherein:
Figure 1 shows a perspective view of an embodiment of bookcase according to the present invention;
Figure 2a shows a front view of the bookcase of Figure 1;
Figure 2b shows a sectional view of the bookcase of Figure 1;
Figure 2c shows a plan view of the bookcase of Figure 1;
Figure 3a shows a perspective view of an embodiment of lighting device according to the present invention;
Figure 3b shows a perspective view of the device of Figure 3a depicting some internal components thereof;
Figure 4a shows a cross-sectional view of a first embodiment of a detail of the lighting device according to the present invention;
Figure 4b shows a cross-sectional view of a second embodiment of a detail of the lighting device according to the present invention;
Figure 4c shows a cross-sectional view of a third embodiment of a detail of the lighting device according to the present invention;
Figure 5a shows a perspective view of an embodiment of partitions according to the present invention;
Figure 5b shows another perspective view of the partitions of Figure 5a in a different configuration thereof;
Figure 5c shows a perspective view of a detail of the partitions of Figure 5a;
Figure 6a shows a perspective view of an embodiment of door according to the present invention;
Figure 6b shows a perspective view of a detail of the door of Figure 6a;
Figure 7a shows a perspective view of an embodiment of armchair according to the present invention;
Figure 7b shows a perspective view of a detail of the armchair of Figure 7a;
Figure 8a shows a perspective view of an embodiment of table according to the present invention;
Figure 8b shows a perspective view of a detail of the table of Figure 8a;
Figure 9a shows a partially sectional side view of another embodiment of armchair according to the present invention; and
Figure 9b shows a cross-sectional view of a detail of the armchair of Figure 9a.

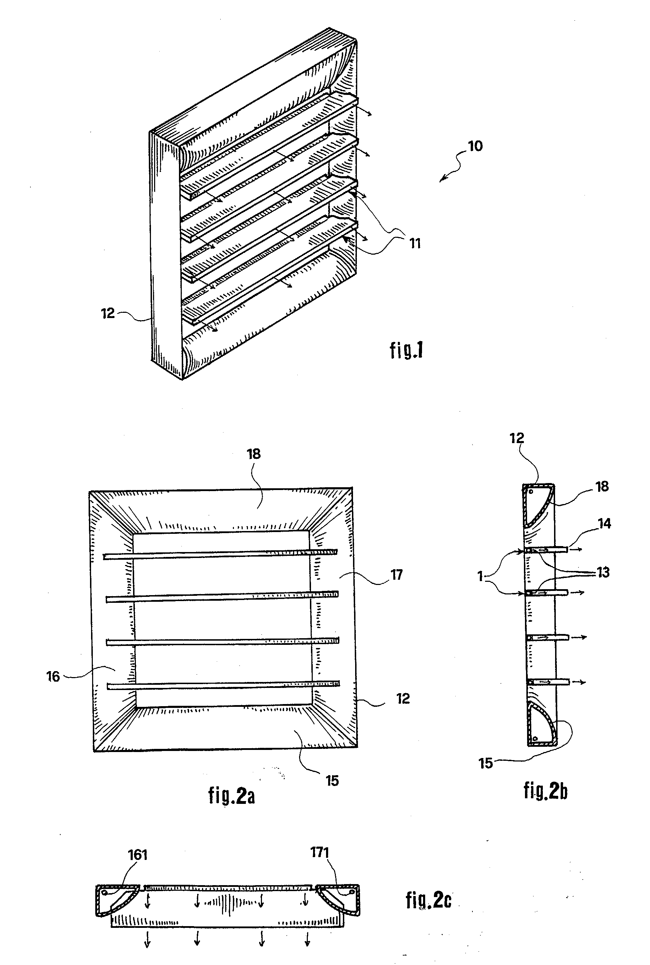

Referring initially to Figure 1, an embodiment of furniture article according to the invention consists in a bookcase, generally indicated by 10.

The bookcase 10 comprises a plurality of shelves, each indicated by 11, forming the main body of the bookcase itself and being supported on a chassis 12.

Referring to Figures 2a to 2c, each shelf 11 is made in form of a substantially parallelepiped-shaped plate apt to serve as a light guide. For this purpose, the shelf 11 is made of coloured transparent Plexiglas or any other suitable material, e.g. another plastic material or glass. Therefore, each shelf 11 has a first transverse light-inletting surface, corresponding in this case to the rear face 13 of the parallelepiped arranged at the rear of the shelf 11, and a second transverse light-outletting surface, corresponding in this case to the front face 14 of the parallelepiped, i.e. to the face arranged at the opposite side with respect to the rear face 13.

Preferably, each shelf 11 has a thickness equal to about 3 cm.

The modes, the materials and the colour selection for making a light guide of the abovedescribed type are well known to a person skilled in the art, and therefore a further description of this aspect will be omitted.

The chassis 12 is made in form of quadrangular frame and it is apt to rest on the floor at a base 15 thereof and to be wall-anchored at side uprights 16 and 17 thereof or at a horizontal top upright 18 thereof.

In order to improve the overall aesthetic effect linked to the brightness of the bookcase 10 and to make such a brightness more effective and enhanced, preferably the frame 12 is coated with a reflecting sheet, e.g. a thin sheet of steel or equivalent material.

The frame 12 has a plurality of horizontally developing seats, each apt to receive a respective shelf 11. Preferably, owing to reasons that will be made apparent hereinafter, at the respective interfaces with the shelves 11 these seats receive one or more light-shielding members, e.g. rubber gaskets (not shown).

In the present embodiment, at each side upright 16, 17 of the bookcase 10 there is arranged a respective lamp 161, 171 apt to provide lighting on the comers of the shelves 11.

Preferably, these lamps 161 and 171 are housed each within the respective upright 16 or 17. In that case, in order to allow a smooth replacement of the lamps 161 and 171, the side uprights 16 and 17 have each a rear door (not shown).

At the light-inletting surface 13 of each shelf 11 there is applied a lighting device according to the invention, generally indicated by 1.

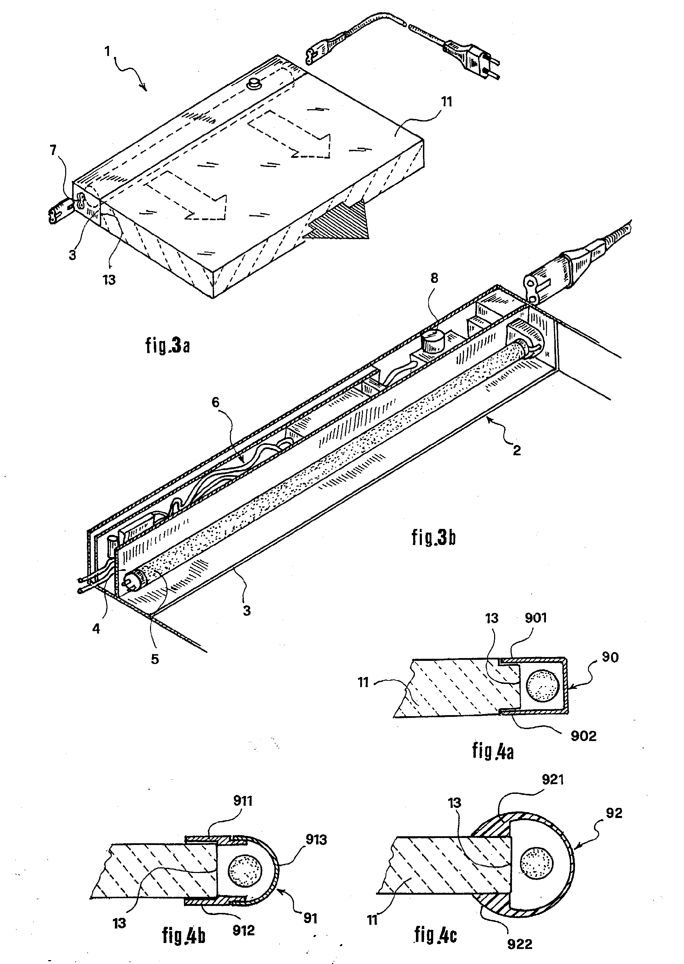

As it is shown in greater detail in Figures 3a and 3b, each lighting device 1 comprises an outer casing 2 of elongated shape, and in particular, in the present embodiment, of substantially parallelepipedal shape.

The casing 2 may be made, e.g., of steel or of equivalent material.

The casing 2 has a light-outletting port 3, it also of elongated contour and substantially quadrangular, corresponding to the shape of the light-inletting surface 13 of the respective shelf 11. In particular, in the present embodiment the port 3 consists in an opening interesting substantially an entire smaller face of the parallelepiped forming the casing 2.

Internally, the device 1 has a partition 4 partitioning a housing receiving a Neon lamp 5 from a housing receiving the circuitry 6 required to power supply the lamp 5.

The Neon lamp 5 has an elongated development and it extends at the light-outletting port 3, it being arranged parallelly to the longitudinal dimension of the latter.

Of course, the Neon lamp 5 of the present embodiment may be replaced by any light source having an analogous elongated development and an analogous arrangement.

The circuitry 6 is of course associated to an outlet 7 arranged at a side of the casing 2 and apt to enable the connection to the mains.

A variant embodiment can also provide the presence of means for self-powering the light source, optionally rechargeable, housed directly within the casing 2.

A further variant can also provide the option of connecting different lighting devices 1 in series. Then, each device 1 of the series could provide one or more respective side terminals for making the electrical connection to the adjacent device or devices.

The device 1 further comprises a switch 8 connected to the circuitry 6 and arranged at a top wall of the casing 2.

In the present embodiment, in which there is provided a plurality of lighting devices 1 each connected to a respective shelf 11, a single switch common to the various devices can be provided as well.

All the internal components of the device 1, and specifically the circuitry 6 and the lamp 5, may be made easily accessible from the outside by making the outer walls of the casing 2 and/or the partition 4 removable.

The device 1 further comprises means for the removable connection of the device itself to the respective shelf 11 of the bookcase 10, the arrangement being such that, when the device 1 is connected to the shelf 11, the light-outletting port 3 is fully engaged by the light-inletting surface 13 of the latter, so that the light is conveyed within the shelf 11 through said inletting surface 13.

Said connection means is susceptible of various alternative implementations, three of which are shown in Figures 4a, 4b and 4c, respectively.

First of all, preferably the removable connection means develops along the entire longitudinal extension of the light-outletting port 3, in order to ensure a lower dispersion of light at the interface between the lamp 5 and the light-inletting surface 13 of the shelf 11, as it will be made apparent also hereinafter.

Referring to Figure 4a, according to a first embodiment said removable connection means, in this case indicated by 90, is of the kind apt to allow a slidable coupling of the device 1 to the shelf 11 at the rear face 13 of the latter forming the light-inletting surface. For this purpose, the means 90 comprises a pair of longitudinal tabs 901 and 902 of the casing 2 forming a guide apt to receive therein the shelf 11 at said rear face 13.

Thus, the device 1 may easily be withdrawn from the rear of the bookcase 10 for procedures of maintenance, replacement, transport, etc.

Alternatively, the removable connection means can implement a pressure fixed-joint.

Referring to Figure 4b, according to a second embodiment the removable connection means, in this case indicated by 91, comprises a clip-like structure apt to engage the shelf 11 always at the rear face 13 thereof forming the light-inletting surface. Such a clip structure is obtained by two flexible longitudinal laminas 911 and 912 protruding beyond the light-outletting port 3 of the casing 2. The laminas 911 and 912 are reciprocally connected by a semi-tubular connector 913 that may be grabbed by a user to spread apart the laminas themselves.

In this case as well, the device 1 may easily be connected to and disconnected from the shelf 11.

Referring to Figure 4c, according to a third embodiment the removable connection means, in this case indicated by 92, provides a pair of elastically deformable longitudinal engaging members, indicated by 921 and 922, respectively, made e.g. of rubber. Also these members protrude beyond the light-outletting port 3, thereby engaging the shelf 11 at the rear face 13 thereof. In this embodiment, the entire outer casing of the device 1 may be elastically deformable, and for this purpose made e.g. of rubber.

Said elastic deformability enables the connection means to adjust to shelves of different thickness.

In this case as well, the device 1 may easily be connected to and disconnected from the shelf 11.

The hereto-described components of the different embodiments of the connection means can also be combined to attain a more effective retainment of the plate of the furniture article of the invention.

Therefore, it will be understood that, by virtue of the implementation and arrangement just described for the shelves 11 and for the respective lighting devices 1, when the internal lamp 5 of a device 1 is turned on by means of the switch 8, light enters the shelf - light guide 11 through the inletting surface 13 of the latter, is transmitted inside of the shelf 11 according to the known principle of total internal reflection and is outletted substantially only at the outletting surface 14, apart of course from minor dispersions.

Therefore, the outletting surface 14 of the shelf 11 has an emphasized brightness, whereas the remainder of the body of the shelf itself, and above all the top and bottom faces thereof, have a diffuse internal brightness. As it is well known to a person skilled in the art, the specific lighting power associated with such top and bottom walls of the light guide depends on the selection of the materials, colours and working of such surfaces. Always as it is well-known to a person skilled in the art, the overall visual effect associated with the light guide 11 is that of a light 'entrapped' between the top and bottom faces thereof, resulting in a charming three-dimensional lighting of the furniture article.

Dispersions of light are practically nil at the interface between the light-inletting surface 13 and the lamp 5, i.e. at the light-outletting port of the device 1, by virtue of the abovedescribed relative arrangement and of the presence of the abovementioned shielding members.

Hereinafter, further embodiments of furniture articles according to the present invention will be disclosed. Of these embodiments solely the aspects differentiating them from what has been described hereto will be described, and components analogous to the abovedescribed ones will be given the same reference number. In particular, each of the articles described hereinafter has a main body made in form of light guide, inside which the light transmission modes and the resulting brightness effect are analogous to the abovedescribed ones.

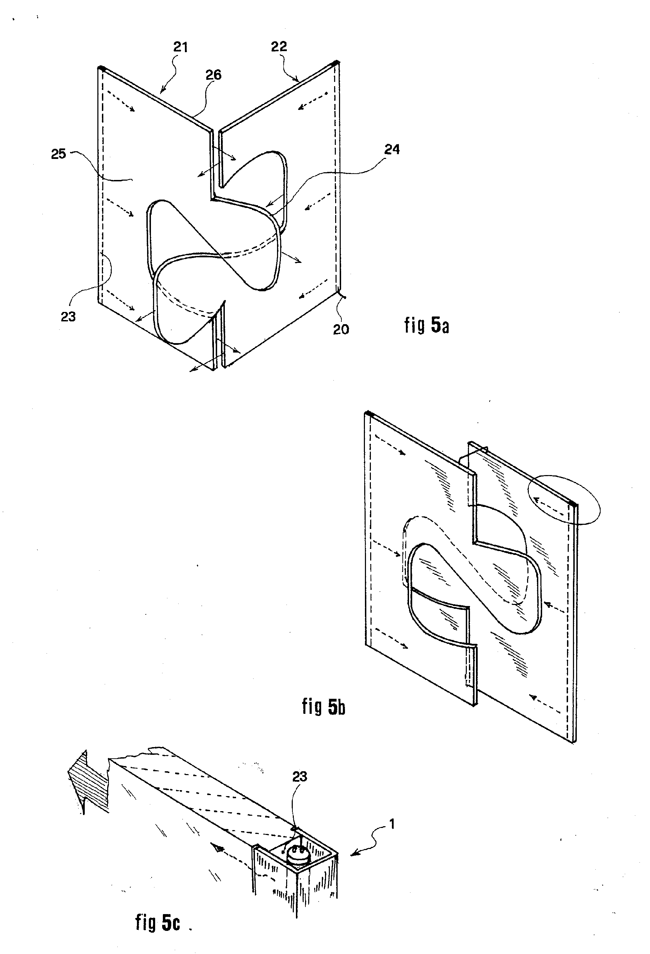

Referring to Figures 5a to 5c, a pair of partitions 21 and 22 according to the invention is supported on a base 20.

The partitions 21 and 22 are made each in form of a coloured transparent Plexiglas plate and have complementary shaping. As it is shown in Figures 5a and 5b, the partitions 21 and 22 are apt to assume different relative positions so as to make a plurality of different configurations.

Each plate 21, 22 has a light-inletting surface 23 of elongated shape, corresponding to a vertically arranged rectangle-shaped end face thereof, and a light-outletting surface 24, corresponding to a shaped surface arranged at the opposite side with respect to the inletting surface 23. In order to limit the transparency, and therefore the light diffusion, at the front 25 and rear 26 faces of each partition 21, 22, the surface thereof is processed by sanding.

At the light-inletting surface 23 of each partition 21, 22 there is arranged a lighting device 1, analogous to the abovedescribed one, which in this case of course has a vertical orientation.

The base 20 may be made of steel, and it engages the partitions 21 and 22 by conventional connection means.

The partitions 21 and 22 may also be directly connected the one to the other by hinges or other conventional connection means.

Therefore, it will be appreciated that, depending on the relative arrangement of the partitions, plural lighting and brightness effects may be created.

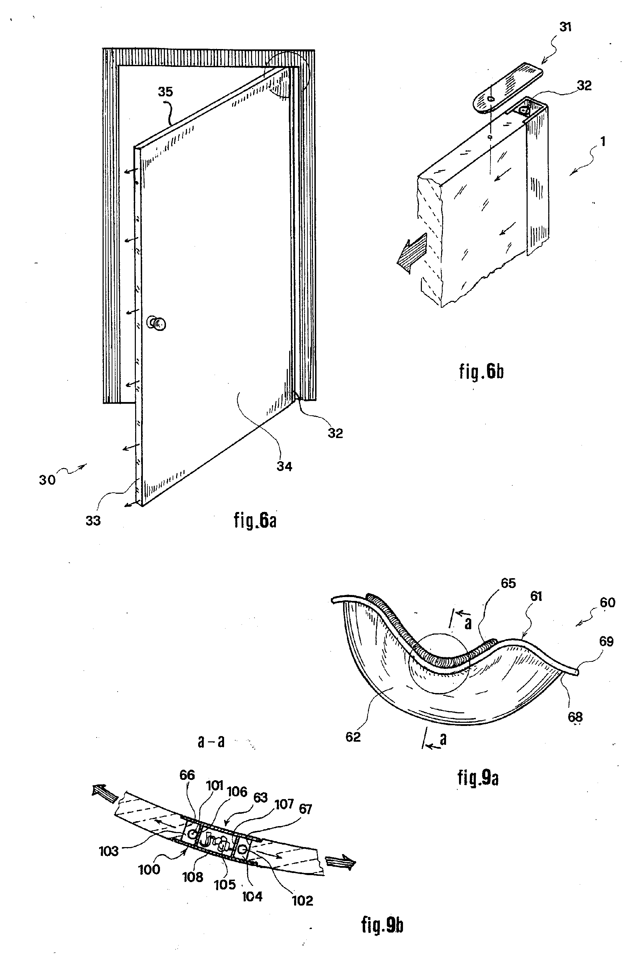

Referring to Figures 6a and 6b, a door 30 comprises a main body, it also indicated by 30, made in form of a coloured transparent Plexiglas plate of substantially parallelepiped shape and conventional means 31 for the connection of the door to a frame and/or to the floor.

The door 30 has a light-inletting surface 32 corresponding to a vertical end face thereof, and specifically to the face adjacent to the chassis. The door 30 further comprises a light-outletting surface 33 corresponding to the vertical face thereof arranged at the opposite side with respect to the inletting face 32. In this case as well, in order to limit light diffusion at the front 34 and rear 35 faces of the door 30, the surface thereof is processed by sanding.

At the light-inletting surface 32 there is arranged a lighting device 1 analogous to the abovedescribed one.

As it is shown in Figure 6b, the device 1 in no way interferes with said means 31 for the connection of the door 30 to a frame and/or to the floor.

It will be appreciated that, by virtue of said arrangement of the light-inletting 32 and light outletting 33 surfaces, the door 30 is apt to light up at the vertical face 33 thereof when it is opened. This enables the occupants of an environment to immediately realize that the door has been opened and, vice versa, enables who goes in a dark environment to make use of an immediate lighting.

According to a variant embodiment, it is also possible to associate to or build in the device 1 a sensor apt to let the device itself light up automatically when the door is opened or anyhow shifted.

Of course, such a motion sensor could also be associated with the bookcase 10 or to the abovedescribed panels 21 and 22. In the specific instance of the bookcase 10, the motion sensor could also be replaced by a weight or pressure sensor apt to detect whether a book or another item is rested onto and/or raised from a shelf 11.

According to the same principle, and benefiting from the same advantages hereto illustrated for the door 30, a closet wing is implementable as well.

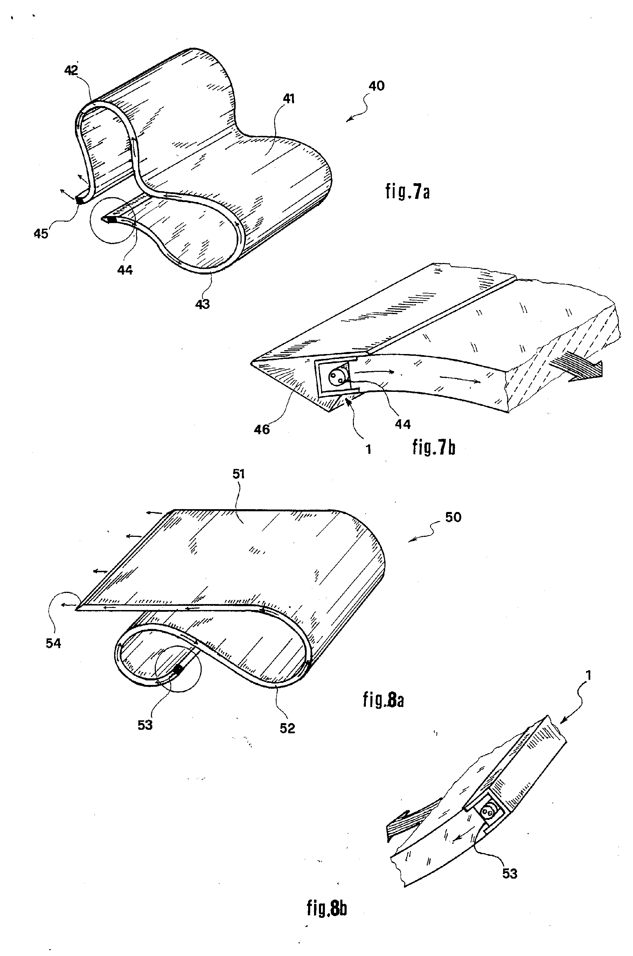

Referring to Figures 7a and 7b, an armchair 40 comprises a main body, it also indicated by 40, made in form of a coloured transparent Plexiglas plate.

The plate 40 comprises a central seat portion 41 having a substantially anatomical shaping and two supporting side portions 42 and 43 for the on-floor support thereof. Thus, in a side view the armchair 40 has a curvilinear contour.

The armchair 40 has a light-inletting surface 44 corresponding to a transverse end face of the supporting portion 43. Such a light-inletting surface 44 has a substantially rectangular shape and it is arranged substantially horizontal.

The armchair 40 further comprises a light-outletting surface 45 corresponding to the end face of the plate 40 arranged onto the end portion 42, at the opposite side with respect to the inletting face 44.

At the light-inletting surface 44 there is arranged a lighting device 1 analogous to the above described one. When needed, at the lighting device 1 there may be arranged a ground-supporting member 46 apt to cushion any impact, e.g. a rubber lining.

Referring to Figures 8a and 8b, a table 50 comprises a main body made in form of a coloured transparent Plexiglas plate, it also indicated by 50. Such a plate 50 comprises a central supporting portion 51, substantially plane and horizontally arranged during normal use, and a supporting portion 52 for the on-floor support. In a side view, this latter portion has a curvilinear contour.

The table 50 has a light-inletting surface 53 corresponding to a transverse end face of the supporting portion 52. Such a light-inletting surface 53 has a substantially rectangular shape and it is arranged substantially horizontal.

The table 50 further comprises a light-outletting surface 54 corresponding to the end face of the plate arranged at the opposite side with respect to the inletting face 53.

At the light-inletting surface 53 there is arranged a lighting device 1 analogous to the above-described one.

Referring to Figures 9a and 9b, an armchair 60 according to another embodiment of the invention comprises a main body 61, made in this case as well in form of a coloured transparent Plexiglas plate, and a rocking support base 62 for said plate 61.

The plate 61 has a substantially anatomical shaping apt to receive a user's body. In particular, in a side view the plate 61 has a curvilinear contour.

On a central portion of the plate 61 there is removably fastened a pillow 65.

At the plate portion 61 underlying the pillow 65 the plate itself has an opening 63 having a quadrangular contour, inside which there is housed a lighting device 100 having construction and operation similar to those of the device 1 of the abovedisclosed first embodiment. Unlike the hereto-described device 1, the device 100 internally comprises two Neon lamps 101 and 102, respectively, each facing a respective light-outletting port 103 and 104, respectively. Each outletting port 103, 104 is in turn engaged by a respective wall 66 or 67 of the opening 63, according to the same modes described hereto with reference to the other embodiments.

Moreover, the lamps 101 and 102 are separated from a common circuitry 105 by two partitions 106 and 107 arranged internally to an outer casing 108.

The arrangement is such that the light-outletting ports 103 and 104 are arranged each substantially parallel to a respective side face 66 or 67 of the plate 61.

Thus, in this embodiment the armchair 60 has two light-inletting surfaces, i.e. said walls 66 and 67 of the opening 63, and two respective light-outletting sections, i.e. the side faces 68 and 69 of the plate 61 forming the longer sides of the armchair 60.

Hence, in this embodiment, unlike the preceding ones, the light-inletting sections are obtained in an intermediate position onto the Plexiglas plate rather than at an end face thereof.

Moreover, according to this embodiment the casing 108 as well as one or both of the lamps 101 and 102 may have a curved contour instead of a linear one.

The device 100 has means for the removable connection to the walls 66 and 67 analogous to the abovedescribed ones.

The rocking support base 62 has an essentially hemispherical shape. Preferably, it is coated with a reflecting material, e.g. bright steel, so as to reflect the floor thereby camouflaging therewith.

By now, it will be understood that the lighting device of the invention lends itself, in particular in the hereto-described embodiments, to a compact implementation in which it in no way affects the aesthetic effect obtained for the associated furniture article.

Moreover, both the lighting device and the furniture article lend themselves to a low-cost implementation, as in the abovedescribed embodiments.

Furthermore, it will be understood that the present invention is susceptible of several embodiments and variants alternative to the hereto-described ones, some of which will briefly be illustrated hereinafter with reference to the sole aspects differentiating them from the hereto-considered embodiments.

First of all, the furniture article of the invention may comprise light-powering means alternative to the device of the invention, connected to the main body thereof and extending along said light-inletting surface of the main body so that the light be conveyed within the latter through the inletting surface.

Moreover, the surfaces of the furniture article that do not form the light-inletting and outletting sections may have a limited transparency, obtained e.g. by sanding, also in furniture articles differing from the abovedescribed door and panels.

Likewise, the weight or motion sensor for the automatic turning on of the lighting device of the invention may also be associated with furniture articles other than the abovedescribed bookcase and door.

Furthermore, the light-outletting port of the device of the invention may consist, rather than in a mere opening, in a window equipped with a transparent or partially transparent panel apt to allow light transmission therethrough.

The present invention has been hereto described with reference to preferred embodiments thereof. It is understood that other embodiments might exist, all falling within the concept of the same invention, and all comprised within the protective scope of the claims hereinafter.

## Claims

1. A lighting device (1; 100),
for use in association with a furniture article (10; 21, 22; 30; 40; 50; 60) comprising a plate (11; 21; 22; 30; 40; 50; 61) apt to serve as light guide having at least one light-inletting surface (13; 23; 32; 44; 53; 66) having an elongated development,
which device (1) comprises:
- an outer casing (2; 108), having a light-outletting port (3; 103) of elongated shape for supplying light to the light-inletting surface of the furniture article;
- a light source (5; 101) having an elongated development, housed within said outer casing and extending at said light-outletting port; and
- means (90; 91; 92) for the removable connection of the device to the plate of the furniture article, arranged so that, when the device itself is connected to the plate, said light-outletting port is entirely engaged by the light-inletting surface of the plate so that the light is conveyed within the plate itself through said inletting surface.

2. The device (1; 100) according to claim 1, wherein said outer casing (2; 108) has a substantially parallelepiped shape and said light-outletting port (3; 103) comprises an opening interesting substantially an entire face of the parallelepiped itself.

3. The device (1; 100) according to claim 1 or 2, wherein said outer casing (2; 108) is elastically deformable.

4. The device (1; 100) according to any one of the preceding claims, wherein said light-outletting port (3; 103) has a substantially quadrangular contour.

5. The device (1; 100) according to any one of the preceding claims, wherein said light source is a Neon lamp (5; 101).

6. The device (1; 100) according to any one of the preceding claims, wherein said means for removable connection (90; 91; 92) develops along the entire longitudinal extension of said light-outletting port (3; 103).

7. The device (1; 100) according to any one of the preceding claims, wherein said means for removable connection (90; 91; 92) is of the fixed-joint type.

8. The device (1; 100) according to any one of the preceding claims, wherein said means for removable connection (90) comprises a sliding guide (901, 902) apt to receive an edge of the plate (11; 21; 22; 30; 40; 50; 61) of the furniture article (10; 21, 22; 30; 40; 50; 60).

9. The device (1; 100) according to any one of the preceding claims, wherein said means for removable connection (92) comprises elastically deformable members (921, 922) apt to be brought in engagement onto the plate (11; 21; 22; 30; 40; 50; 61) of the furniture article (10; 21, 22; 30; 40; 50; 60).

10. The device (1; 100) according to any one of the preceding claims, wherein said means for removable connection (91) comprises a clip-like structure apt to engage the plate (11; 21; 22; 30; 40; 50; 61) of the furniture article (10; 21, 22; 30; 40; 50; 60).

11. The device (1; 100) according to any one of the preceding claims, comprising means for self-powering said light source (5; 101).

12. The device (1; 100) according to any one of the preceding claims, comprising means for making a serial electrical connection to analogous devices.

13. A furniture article (10; 21, 22; 30; 40; 50; 60), comprising:
- a main body in form of at least one plate (11; 21; 22; 30; 40; 50; 61) apt to serve as a light guide and comprising at least one first light-inletting surface (13; 23; 32; 44; 53; 66) having an elongated development and at least one second light-outletting surface (14; 24; 33; 45; 54; 68); and
- lighting means (1; 100), connected or connectable to said plate and extending along said light-inletting surface so that the light is conveyed within said plate through said inletting surface.

14. The furniture article (10; 21, 22; 30; 40; 50; 60) according to the preceding claim, wherein said light-outletting surface (14; 24; 33; 45; 54; 68) is arranged at the opposite side of said plate (11; 21; 22; 30; 40; 50; 61) with respect to said light-inletting surface (13; 23; 32; 44; 53; 66).

15. The furniture article (10; 21, 22; 30; 40; 50) according to claim 13 or 14, wherein said light-inletting surface (13; 23; 32; 44; 53) is an end surface of said main body.

16. The furniture article (60) according to claim 13 or 14, wherein said light-inletting surface (66) is an intermediate surface of said main body.

17. The furniture article (40; 50; 60) according to any one of the claims 13 to 16, wherein said plate (40; 50; 61) has a curvilinear development.

18. The furniture article (10; 21, 22; 30; 40; 50; 60) according to any one of the claims 13 to 17, wherein said plate (11; 21; 22; 30; 40; 50; 61) is made of Plexiglas.

19. The furniture article (10; 21, 22; 30; 40; 50; 60) according to any one of the claims 13 to 18, comprising light-shielding means arranged at said connection between said lighting means (1; 100) and said plate (11; 21; 22; 30; 40; 50; 61).

20. The furniture article (10; 21, 22; 30; 40; 50; 60) according to any one of the claims 13 to 19, comprising a sensor apt to determine the automatic turning on of said lighting means (1; 100).

21. The furniture article (10) according to any one of the claims 13 to 20, which is a bookcase and wherein said plate (11) forms at least one shelf of the bookshelf itself.

22. The furniture article (50) according to any one of the claims 13 to 20, which is a table.

23. The furniture article (50) according to the preceding claim, wherein said plate (50) forms both the supporting plane (51) and a supporting structure (52) for said supporting plane.

24. The furniture article (40; 60) according to any one of the claims 13 to 20, which is an armchair and wherein said plate (40; 61) forms a seat portion (41) of the armchair itself.

25. The furniture article (60) according to the preceding claim, comprising a rocking support base (62) of said seat portion.

26. The furniture article (60) according to claim 24 or 25, comprising a reflecting support base (62) of said seat portion.

27. The furniture article (30) according to any one of the claims 13 to 20, which is a door and wherein said plate (30) forms the door wing body.

28. The furniture article (30) according to any one of the claims 13 to 20, which is a closet wing and wherein said plate (30) forms the wing body.

29. The furniture article (21; 22) according to any one of the claims 13 to 20, which is a partition and wherein said plate (21; 22) forms the partition body.

30. The furniture article (10; 21, 22; 30; 40; 50; 60) according to any one of the claims 13 to 29, wherein said lighting means (1; 100) is removably connectable to said plate (11; 21; 22; 30; 40; 50; 61).

31. The furniture article (10; 21, 22; 30; 40; 50; 60) according to any one of the claims 13 to 30, wherein said lighting means comprises a device (1; 100) according to any one of the claims 1 to 12.
